# EUROPÄISCHE PATENTANMELDUNG

(11) **EP 4 368 292 A1**
(43) Veröffentlichungstag der Anmeldung: **15.05.2024**
(21) Anmeldenummer: 23209814.5
(22) Anmeldetag: 14.11.2023
(51) Int. Cl.: B03C 1/033, B03C 1/04, B03C 1/06, B03C 1/08, B03C 1/10, B03C 1/12, B03C 1/14, B03C 1/16, B03C 1/18, B03C 1/20, B03C 1/22, B03C 1/247

(54) **VORRICHTUNG UND VERFAHREN ZUM SEPARIEREN VON FERROMAGNETISCHEN PULVERPARTIKELN VON DAMIT VERMISCHTEN NICHT-FERROMAGNETISCHEN PULVERPARTIKELN**

(30) Priorität: 14.11.2022 DE 102022212061
(71) Anmelder: Fraunhofer-Gesellschaft zur Förderung der angewandten Forschung e.V., 80686 München (DE)
(72) Erfinder: Horn, Max, 86159 Augsburg (DE); Kindermann, Philipp, 86159 Augsburg (DE); Bhattacherjee, Mainak, 86163 Augsburg (DE)
(74) Vertreter: Pfenning, Meinig & Partner mbB

(57) **Zusammenfassung**

Die Erfindung betrifft eine Vorrichtung und ein Verfahren zum Separieren von ferromagnetischen Pulverpartikeln (5) von damit vermischten nicht-ferromagnetischen Pulverpartikeln (6), insbesondere mit Partikelgrößen von 250 µm oder weniger. Die Vorrichtung umfasst eine Sortieranordnung, die eingerichtet ist für einen Abtransport der ferromagnetischen Pulverpartikel (6) entlang einer Abtransporttrajektorie (10), wobei die Sortieranordnung eine Vielzahl entlang der Abtransporttrajektorie (10) angeordneter Magnete (1) mit alternierender Polung und eine nicht-magnetische Trennschicht (4), die die Magneten (1) gegenüber den abzutransportierenden ferromagnetischen Pulverpartikeln (5) abdeckt, umfasst. Die Sortieranordnung ist manipulierbar ausgestaltet und eingerichtet ist für eine Manipulation durch Bewegen der Magnete (1) entgegen einer Richtung der Abtransporttrajektorie (10) und/oder zyklisches Umpolen der Magnete (1) und/oder Bewegen der Trennschicht (4) entlang der Richtung der Abtransporttrajektorie (10), wobei die Vorrichtung weiterhin eine Transportanordnung (7) umfasst, die dafür eingerichtet ist, die miteinander vermischten Pulverpartikel (5, 6) aufzunehmen und zu der Sortieranordnung zu führen, so dass die Magnete (1) die ferromagnetischen Pulverpartikel (5) ablenken und zu der Trennschicht (4) ziehen, und die angezogenen ferromagnetischen Pulverpartikel (5) während der Manipulation der Sortieranordnung mit einer die Abtransporttrajektorie (10) überlagernden Sprungbewegung in Bezug auf die Trennschicht (4) abtransportiert werden.

## Beschreibung

Die vorliegende Erfindung liegt auf dem Gebiet des Maschinenbaus. Sie ist mit besonderem Vorteil im Zusammenhang mit der additiven Fertigung mittels Multimaterial-Laserstrahlschmelzen anwendbar.

Bei der additiven Fertigung mittels Multimaterial-Laserstrahlschmelzen können mehrere Werkstoffe gleichzeitig in einem einzigen Prozess verarbeitet werden. Die Werkstoffe liegen dabei zu Beginn als getrennte Pulver vor. Während der Fertigung wird aus den verschiedenen Pulvern ein Werkstück hergestellt, wobei prinzipiell jedem Voxel ein separater Werkstoff zugeordnet werden kann. Dies bringt große Vorteile hinsichtlich der Designfreiheit mit sich. Jedoch vermischen sich in dem Prozess nicht im Werkstück verwendete Pulverpartikel miteinander. Um übrig gebliebenes Pulver wiederverwenden zu können, müssen die darin enthaltenen unterschiedlichen Pulverpartikel voneinander separiert und aufbereitet werden.

Wenn bei einer additiven Fertigung übrig gebliebenes Pulver ferromagnetische Pulverpartikel und nicht-ferromagnetische Pulverpartikel enthält, können magnetische Kräfte genutzt werden, um die ferromagnetischen Pulverpartikel und die nicht-ferromagnetischen Pulverpartikel voneinander zu trennen.

Bei der additiven Fertigung sind jedoch die Anforderungen an die Pulverreinheit besonders hoch und bisher sind keine Anordnungen bekannt, die eine entsprechende Qualität zuverlässig erreichen können.

Aufgabe der Erfindung ist es daher, eine Lösung vorzuschlagen, wie ferromagnetische und nicht-ferromagnetische Pulverpartikel so zuverlässig voneinander getrennt werden können, dass die Produkte des Sortierprozesses eine für die additive Fertigung ausreichende Qualität besitzen.

Dies wird gelöst durch eine Vorrichtung zum Separieren von ferromagnetischen Pulverpartikeln von damit vermischten nicht-ferromagnetischen Pulverpartikeln gemäß Anspruch 1 sowie durch ein Verfahren gemäß dem nebengeordneten Anspruch. Vorteilhafte Ausführungen ergeben sich aus den abhängigen Ansprüchen sowie aus der nachfolgenden Beschreibung und den Figuren.

Dementsprechend umfasst die Vorrichtung zum Separieren von ferromagnetischen Pulverpartikeln von damit vermischten nicht-ferromagnetischen Pulverpartikeln eine Sortieranordnung, die eingerichtet ist für einen Abtransport der ferromagnetischen Pulverpartikel entlang einer Abtransporttrajektorie.

Die Sortieranordnung umfasst eine Vielzahl entlang der Abtransporttrajektorie angeordneter Magnete mit alternierender Polung und eine nicht-magnetische Trennschicht, die die Magneten gegenüber den abzutransportierenden ferromagnetischen Pulverpartikeln abdeckt. Es versteht sich, dass es sich bei den Magneten beispielsweise um Permanentmagneten und/oder um Elektromagneten handeln kann.

Die Sortieranordnung ist manipulierbar ausgestaltet ist und eingerichtet für eine Manipulation durch
- Bewegen der Magnete entgegen einer Richtung der Abtransporttrajektorie
   und/oder
- zyklisches Umpolen der Magnete
   und/oder
- Bewegen der Trennschicht entlang der Richtung der Abtransporttrajektorie.

Die Vorrichtung umfasst weiterhin eine Transportanordnung, die dafür eingerichtet ist, die miteinander vermischten Pulverpartikel aufzunehmen und zu der Sortieranordnung zu führen, so dass die Magnete die ferromagnetischen Pulverpartikel ablenken und zu der Trennschicht ziehen, und die angezogenen ferromagnetischen Pulverpartikel während der Manipulation der Sortieranordnung mit einer die Abtransporttrajektorie überlagernden Sprungbewegung in Bezug auf die Trennschicht abtransportiert werden.

Das Verfahren zum Separieren von ferromagnetischen Pulverpartikeln von damit vermischten nicht-ferromagnetischen Pulverpartikeln umfasst:
- Bereitstellen einer Sortieranordnung für einen Abtransport der ferromagnetischen Pulverpartikel entlang einer Abtransporttrajektorie, wobei die Sortieranordnung eine Vielzahl entlang der Abtransporttrajektorie angeordneter Magnete mit alternierender Polung und eine nicht-magnetische Trennschicht, die die Magneten gegenüber den abzutransportierenden ferromagnetischen Pulverpartikeln abdeckt, umfasst;
- Führen der miteinander vermischten Pulverpartikel zu der Sortieranordnung, so dass die Magnete die ferromagnetischen Pulverpartikel ablenken und zu der Trennschicht ziehen;
- Manipulieren der Sortieranordnung durch
   - Bewegen der Magnete entgegen einer Richtung der Abtransporttrajektorie
      und/oder
   - zyklisches Umpolen der Magnete
      und/oder
   - Bewegen der Trennschicht entlang der Richtung der Abtransporttrajektorie,
      so dass die angezogenen ferromagnetischen Pulverpartikel mit einer die Abtransporttrajektorie überlagernden Sprungbewegung in Bezug auf die Trennschicht abtransportiert werden.

Insbesondere kann die Vorrichtung zur Durchführung des Verfahrens verwendet werden bzw. kann es sich bei dem Verfahren um eine Verwendung der vorgestellten Vorrichtung handeln. Es sei betont, dass hier im Zusammenhang mit der Vorrichtung offenbarte Aspekte auch für das Verfahren beansprucht werden können und umgekehrt.

Die Vorrichtung und das Verfahren eigenen sich besonders zum Sortieren von Pulvern mit Partikelgrößen von 250 µm oder weniger, wie nachfolgend noch erläutert wird. Dementsprechend handelt es sich bei der Vorrichtung insbesondere um eine Vorrichtung, die eingerichtet und verwendet werden kann zum Separieren von Pulverpartikeln mit Partikelgrößen von 250 µm oder weniger, und in anmeldungsgemäßen Verfahren werden insbesondere Pulverpartikel mit Partikelgrößen von 250 µm oder weniger voneinander getrennt.

In einer Ausgestaltung des hier gezeigten Verfahrens, in dem insbesondere die hier vorgestellte Vorrichtung verwendet werden kann, können die miteinander vermischten ferromagnetischen Pulverpartikel und nicht-ferromagnetischen Pulverpartikel Partikel mit Partikelgrößen von höchstens 250 µm umfassen. In einer Ausgestaltung umfassen sie ausschließlich Partikel mit Partikelgrößen von höchstens 250 µm.

Die Erfinder haben erkannt, dass gerade bei den oben genannten im Rahmen der additiven Fertigung üblichen Partikelgrößen die ferromagnetischen Pulverpartikel, wenn sie angezogen werden, in deutlichem Maße nicht-ferromagnetische Partikel mitreißen können, was dazu führt, dass eine ausreichende Pulverreinheit nicht ohne weiteres erreichbar ist.

Die Lösung für dieses Problem liegt in der anmeldungsgemäßen Manipulation. Dabei wird zwischen den Magneten und der Trennschicht eine Dynamik erzeugt. Insbesondere kann dabei eine Relativbewegung zwischen den Magneten und der Trennschicht vorgesehen sein, wenn zumindest eine der Komponenten wie oben erläutert bewegbar ist. Alternativ oder zusätzlich kann durch das mögliche zyklische Umpolen der Magnete, wofür insbesondere Elektromagnete vorgesehen sein können, eine Dynamik für die Magnete erreicht werden, die einer translatorischen Bewegung ähnelt, indem die nebeneinander liegenden Magneten entsprechend aufeinander abgestimmt zyklisch und zueinander entgegengesetzt umgepolt werden.

Das anmeldungsgemäße Springen der ferromagnetischen Pulverpartikel wird dabei bewirkt durch das notwendige Passieren von Magneten unterschiedlicher Polung bzw. durch die Interaktion mit Magneten unterschiedlicher Polung. Da die Pulverpartikel nicht direkt an den Magneten haften, sondern durch die Trennschicht von den Magneten getrennt sind, geraten die Pulverpartikel während der Manipulation aus dem Einflussbereich des einen Magneten heraus und in den Einflussbereich des nächsten Magneten hinein, bzw. wird der unter den Partikeln liegende Magnet plötzlich umgepolt. Die Trennschicht kann dabei beispielsweise eine Rauigkeit aufweisen, um ein vorübergehendes Anhaften der Pulverpartikel zu erreichen. Dabei kann eine gewünschte Rauigkeit der Trennschicht bereitgestellt sein, indem die Trennschicht bspw. aus einem gewalzten Blech gefertigt ist. Die ferromagnetischen Pulverpartikel springen dann auf der Trennschicht von einem Magneten einer bestimmten Polung zu einem nachfolgenden Magneten gleicher Polung (ausgelöst durch das Weiterdrehen oder das Umpolen), in Richtung der Abtransporttrajektorie (überlagert von der Sprungbewegung), dabei z.B. einen dazwischen angeordneten Magneten entgegengesetzter Polung überspringend. Dieses Springen bewirkt eine zusätzliche Separation, wobei beim ursprünglichen Ablenken mitgerissene nicht-ferromagnetischen Partikel abgeschüttelt werden.

Die abgeschüttelten nicht-ferromagnetischen Partikel können z.B. zurück auf die Transportanordnung fallen und bspw. darüber abtransportiert werden.

Die Abtransporttrajektorie kann beispielsweise eine Richtungskomponente aufweisen, die einer Transportrichtung der Transportanordnung entgegengesetzt ist.

Die Ablenkung der ferromagnetischen Pulverpartikel von der Transportanordnung zu der Trennschicht findet typischerweise entlang einer Ablenkrichtung statt, die eine Richtungskomponente aufweist, die von einer durch die Transportanordnung definierten Trajektorie abweicht. Bspw. kann das Ablenken von der Transportanordnung weg, z.B. nach oben, insbesondere entgegen der Schwerkraft stattfinden.

Die Transportanordnung kann eine Rutsche enthalten, in der die Schwerkraft den Transport bewirkt, und die Ablenkrichtung kann eine Komponente umfassen, die der Schwerkraft entgegen wirkt.

Die Transportanordnung kann beispielsweise eine Rutsche mit einstellbarem Winkel umfassen. Alternativ oder zusätzlich kann die Transportanordnung ein Förderband umfassen.

Die Transportanordnung, insbesondere in Form einer Rutsche, kann beispielsweise einen Neigungswinkel von mindestens 1° und/oder höchstens 89° zur Horizontalen aufweisen. Beispielsweise kann der Neigungswinkel mindestens 10° und/oder höchstens 45° betragen.

Die Transportanordnung, insbesondere in Form einer Rutsche, kann unterhalb der Sortieranordnung vorbeiführen. D.h., sie kann in Richtung der Schwerkraft unter den Magneten und der Trennschicht vorbeiführen, so dass die angezogenen Pulverpartikel entgegen der Schwerkraft nach oben abgehoben werden. Beispielsweise kann die Transportanordnung, insbesondere Rutsche, in einem Abstand von höchstens 20 cm, oder von höchstens 10 cm oder von höchstens 5 cm oder von höchstens 2 cm unter der Sortieranordnung vorbeführen, so dass die angezogenen Partikel in der Regel eine entsprechende Distanz überwinden müssen, wenn sie bis zur Trennschicht gezogen werden.

Die Rutsche kann aus einem nicht-magnetisierbaren oder einem nicht-magnetischen Material gefertigt sein.

Die Rutsche eine Rauheit (Mittenrauwert) von Rₐ = 25 µm oder weniger aufweisen.

Für die Rutsche kann eine Vibrationsanordnung vorgesehen sein, die dafür eingerichtet ist, Vibrationen in die Rutsche einzuleiten.

Eine Vibrationsanordnung kann alternativ oder zusätzlich auch für ein Pulverreservoir und/oder eine damit verbundene Dosiervorrichtung vorgesehen sein, aus dem oder aus der die miteinander vermischten Pulverpartikel auf die Transportanordnung gegeben werden. Vorzugsweise ist die Transportanordnung, insbesondere Rutsche, von dem Pulverreservoir und/oder der Dosiervorrichtung vibrationsentkoppelt, zumindest in Fällen, in denen zumindest eine dieser Komponenten eine Vibrationsanordnung aufweist. In einem Beispiel kann die Transportanordnung, insbesondere Rutsche, nicht-vibrierend ausgestaltet sein, während das Pulverreservoir und/oder die Dosiervorrichtung vibrierend ausgestaltet sind.

Die Transportanordnung kann alternativ oder zusätzlich auch eine Gasstromerzeugungsvorrichtung und/oder weitere Magneten umfassen, die den Transport (mit)bewirken. Die Magneten der Sortieranordnung lenken dann in solchen Beispielen die ferromagnetischen Partikel aus der Transportanordnungstrajektorie, die durch die Schwerkraft und/oder durch den Gasstrom und/oder durch die weiteren Magneten und/oder das Förderband definiert sein kann, ab.

In dem Verfahren kann es vorgesehen sein, dass die Magneten die ferromagnetischen Pulverpartikel in eine Ablenkrichtung ablenken, die eine Komponente aufweist, die einem Schwerefeld der Erde entgegengesetzt ist. Alternativ oder zusätzlich kann es vorgesehen sein, dass die Magneten die ferromagnetischen Pulverpartikel aus einer durch einen Luftstrom der Transportvorrichtung und/oder einer durch weitere Magneten der Transportvorrichtung für das zugeführte Pulver definierten Trajektorie ablenken.

Die Abtransporttrajektorie für die ferromagnetischen Pulverpartikel kann beispielsweise oberhalb (in Bezug auf das Schwerefeld der Erde) der Sortieranordnung und über die Sortieranordnung hinweg verlaufen. Die Abtransporttrajektorie kann zum Beispiel auch seitlich über die Transportanordnung hinaus verlaufen und/oder die Abtransporttrajektorie kann über eine Öffnung hinweg verlaufen, in die die nicht-ferromagnetischen Partikel hineinfallen sollen.

In einer beispielhaften Ausgestaltung der Vorrichtung sind die Magnete in oder an einer zylindrischen Trommel angeordnet und die Trennschicht umgibt die Trommel mit den Magneten als zylindrische Kapselung.

Ein Außendurchmesser der Trommelanordnung, bspw. inklusive Kapselung, kann zum Beispiel mindestens 10 mm und/oder höchstens 1000 mm betragen.

In einem anderen Beispiel sind die Magnete in oder an einem Band angeordnet und die Trennschicht ist beispielsweise als weiteres Band ausgebildet.

Wenn die Magneten und/oder die Trennschicht bewegt werden und/oder die Magneten umgepolt werden, werden die Geschwindigkeiten bzw. Frequenzen so gewählt, dass effiziente Trennung bei langsamem Pulverabtransport stattfindet, um ausreichende Sortiergüten zu gewährleisten. Die Ermittlung der genauen Prozessparameter kann durch Variation der Prozessparameter und anschließende Untersuchung der Sortiergüte in Testläufen ermittelt werden und kann je nach Pulverzusammensetzung variieren.

Bei Trommelanordnungen können bspw. Drehgeschwindigkeiten zwischen 120 und 255 Umdrehungen pro Minute verwendet werden. Bei Bandanordnungen können entsprechende Geschwindigkeiten eingestellt werden.

Die Vorrichtung kann eine Steuereinheit zum Steuern der Manipulation aufweisen. Damit können die Prozessparameter eingestellt werden. Beispielsweise können mit der Steuereinheit eine Geschwindigkeit der Bewegung der Magnete (z.B. Rotationsgeschwindigkeit oder Bandgeschwindigkeit) und/oder eine Frequenz des zyklischen Umpolens der Magnete und/der eine Geschwindigkeit der Bewegung der Trennschicht (z.B. Rotationsgeschwindigkeit oder Bandgeschwindigkeit) einstellbar sein. Weiterhin können optional über eine solche Steuereinheit z.B. auch Luft- bzw. Gasdrücke, insbesondere zum Steuern einer Pulverzufuhr, und/oder der Winkel einer möglichen Rutsche und/oder Abstand zwischen Transportanordnung und Sortieranordnung und/oder Größe einer Auslassöffnung einer Dosiervorrichtung für die Pulverzustellung und/oder Geschwindigkeit eines möglichen Förderbands der Transportanordnung einstellbar sein.

In möglichen Ausführungsformen ist die Trommel dafür eingerichtet, entgegen der Abtransporttrajektorie und/oder der Transportrichtung zu rotieren. Ebenso kann in möglichen Ausführungsformen das Band mit den Magneten dafür eingerichtet sein, entgegen der Abtransporttrajektorie und/oder der Transportrichtung zu laufen. Die rotierende Trommel schafft eine zyklische Bewegung, und auch das Band wird typischerweise so eingerichtet, dass es als umlaufendes Band, ähnlich einem Förderband ausgestaltet ist. Das Besondere ist dabei aber, dass die ferromagnetischen Partikel - anders als bei einem typischen Förderband - entgegen der Bewegungsrichtung der Magneten abtransportiert werden, was eine Besonderheit der vorliegenden Erfindung darstellen kann.

In möglichen Ausführungsformen ist die Trennschicht nicht-beweglich ausgebildet ist. Die Manipulation kann dann einzig durch die Magneten erfolgen, die bewegt und/oder zyklisch umgepolt werden.

Es kann vorgesehen sein, dass die Vorrichtung mindestens eine der Sortieranordnung nachgelagerte weitere Sortieranordnung umfasst. Bei dieser kann es sich um eine weitere Sortieranordnung gemäß dieser Anmeldung handeln, die zur ersten Sortieranordnung identisch aufgebaut sein kann, oder andersartig ausgebildet sein kann. Eine solche weitere Sortieranordnung kann im Maschinenweg im Anschluss an die Abtransporttrajektorie angeordnet sein, um das abgelenkte Pulver, das vornehmlich ferromagnetische Pulverpartikel enthalten sollte, nochmals nachzusortieren. Alternativ oder zusätzlich kann eine weitere Sortieranordnung im Maschinenweg hinter der Transportanordnung vorgesehen sein, um die nicht abtransportierten, vornehmlich nicht-ferromagnetischen Pulverpartikel, die auf der Transportanordnung bleiben oder darauf zurückfallen sollten, nachzusortieren.

Die Vorrichtung kann optional mindestens eine Abstreifvorrichtung umfassen. Die Abstreifvorrichtung kann beispielsweise ein rotierbares Paddel umfassen. Alternativ oder zusätzlich kann die Abstreifvorrichtung in Relation zu der Sortieranordnung bewegbar sein. Insbesondere kann die Abstreifvorrichtung in Bezug auf die Sortieranordnung frei platzierbar sein, um einen gewünschten Abstand und damit Eingriffsstärke einstellen zu können. Dafür kann die Abstreifvorrichtung bspw. eine Magnetkupplung für das Abstreifpaddel enthalten. So kann auch eine Bohrung, bspw. in einer Gehäusewand eines Kammergehäuses der Vorrichtung, vermieden werden.

In einer möglichen Ausführung der Vorrichtung sind die Magnete in oder an einer zylindrischen Trommel angeordnet und die Trennschicht umgibt die Trommel mit den Magneten als zylindrische Kapselung, wobei eine Achse der Trommel horizontal ausgerichtet ist und die Abtransporttrajektorie an einer Oberseite der Trommel um die Trommel läuft.

In einer anderen möglichen Ausführung der Vorrichtung sind die Magnete in oder an einem Band angeordnet und die Trennschicht ist beispielsweise als weiteres Band ausgebildet, wobei das Band oberhalb der Transportanordnung angeordnet. Das Band und das weitere Band können dann z.B. zumindest abschnittsweise entlang der Trajektorie der Transportanordnung verlaufen, z.B. im Wesentlichen parallel dazu, um auf diesem Abschnitt möglichst viele ferromagnetische Pulverpartikel einsammeln zu können. Der Abtransport kann dann im Wesentlichen entlang der Transportrichtung und/oder entgegen der Transportrichtung geschehen. Der Abtransport kann z.B. unten am Band geschehen, d.h., die magnetisch eingefangenen Pulverpartikel werden entgegen der Schwerkraft nach oben zum Band gezogen.

Nachfolgend wird die Erfindung anhand der beigefügten Figuren beispielhaft erläutert.

Darin zeigen
- Fign. 1a, b: Vorrichtungen zum Separieren von ferromagnetischen Pulverpartikeln von damit vermischten nicht-ferromagnetischen Pulverpartikeln, mit zylindrischen Sortieranordnungen und
- Fig. 2: eine Vorrichtungen zum Separieren von ferromagnetischen Pulverpartikeln von damit vermischten nicht-ferromagnetischen Pulverpartikeln, mit bandartigen Sortieranordnungen.

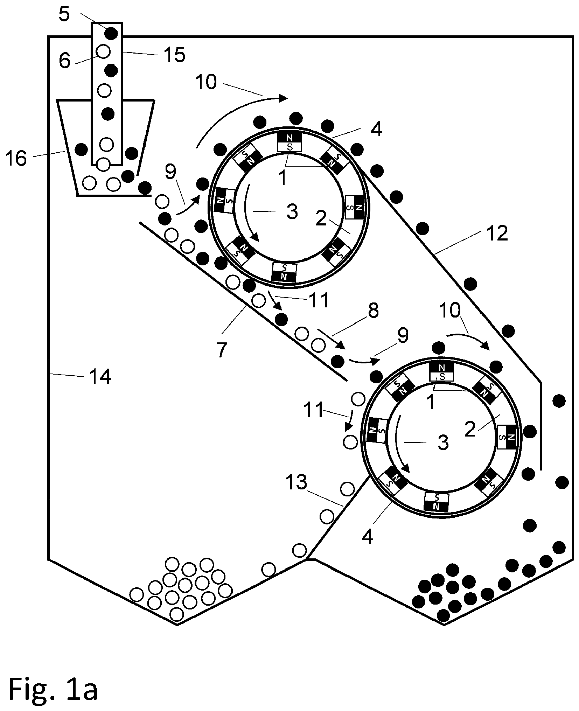

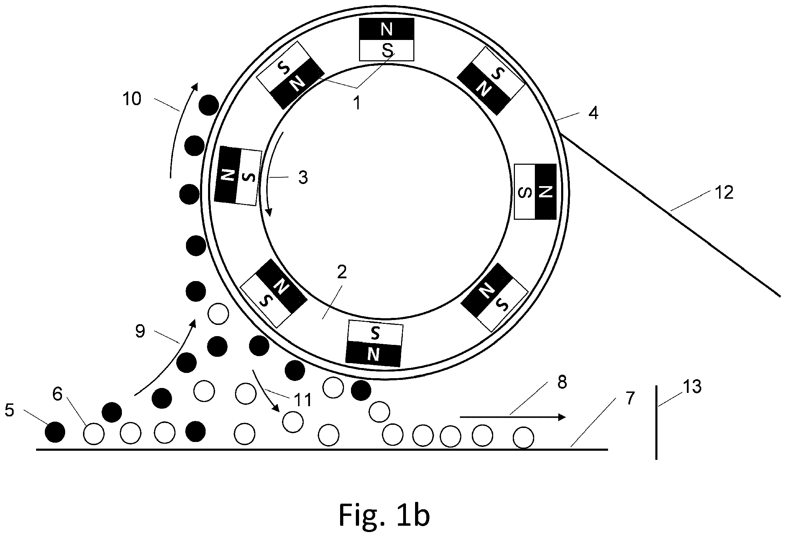

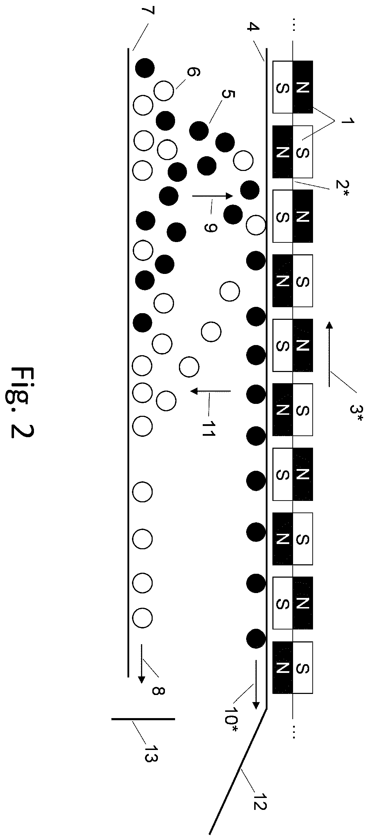

Bezugnehmend auf die Figuren 1a, b und 2 sind dort jeweils Vorrichtungen zum Separieren von ferromagnetischen Pulverpartikeln 5 von damit vermischten nicht-ferromagnetischen Pulverpartikeln 6 gezeigt. Die Vorrichtungen sind dafür vorgesehen und eingerichtet, bei der additiven Fertigung eingesetzte Pulverpartikel, die sich während des Fertigungsprozesses miteinander vermischt haben, wieder zu separieren, um übrig gebliebenes Pulver wiederverwenden zu können. Die Vorrichtungen können also mit besonderem Vorteil benutzt werden, um Pulverpartikel mit Partikelgrößen von 250 µm oder wenige voneinander zu separieren.

Die Vorrichtungen umfassen dabei jeweils ein oder mehrere Sortieranordnungen, die eingerichtet sind für einen Abtransport der ferromagnetischen Pulverpartikel 5 entlang einer Abtransporttrajektorie 10.

Fig. 1a zeigt dabei eine Vorrichtung mit zwei nacheinander geschalteten manipulierbaren Sortieranordnungen, die jeweils eine Vielzahl entlang der Abtransporttrajektorie 10 angeordneter Magnete 1 mit alternierender Polung aufweisen. Die Magnete 1 sind in einer zylindrischen Trommel 2 angeordnet, deren Achse sich horizontal erstreckt. Eine nichtmagnetische Trennschicht 4 umgibt die Trommel 2 mit den Magneten 1 als zylindrische Kapselung und deckt so die Magneten 1 gegenüber den abzutransportierenden ferromagnetischen Pulverpartikeln 5 ab.

Die Sortieranordnungen sind dergestalt manipulierbar, dass eine Manipulation durch Bewegen der Magnete 1 entgegen der Abtransporttrajektorie 10 vorgesehen ist, wie nun im Detail erläutert wird.

Die Vorrichtung umfasst ein Gehäuse 14, an dessen Oberseite eine Öffnung vorgesehen ist, in der ein Rohr 15 angeordnet ist. Über das Rohr 15 wird in einem Verfahren zum Separieren von ferromagnetischen Pulverpartikeln 5 von damit vermischten nicht-ferromagnetischen Pulverpartikeln 6 ein Pulvergemisch zugestellt, das die beiden Partikelarten enthält. Das Pulvergemisch gelangt über das Rohr in ein Pulverreservoir 16, aus dem das Pulvergemisch dosiert dem im Maschinenweg nachfolgenden Sortiermechanismus zugestellt werden kann. Dafür ist eine Auslassspaltgröße des Pulverreservoirs einstellbar.

Das Pulvergemisch rieselt dann kontrolliert auf eine Transportanordnung 7, die eine durch ein schräges Blech gebildete Rutsche umfasst und über die die miteinander vermischten Pulverpartikel 5, 6 entlang einer Transportrichtung 8 zu der Sortieranordnung geführt werden. Dabei rutschen die Pulverpartikel 5, 6 unterhalb der ersten der zwei Sortieranordnungen vorbei.

Die Rutsche der Transportanordnung 7 und das Pulverreservoir 16 sind jeweils mit einer eigenen Vibrationsanordnung verbunden. Dabei sind die Rutsche und das Pulverreservoir 16 voneinander entkoppelt, so dass sie durch ihre jeweilige Vibrationsanordnung unabhängig voneinander in Vibrationen versetzt werden können. Alternativ kann die Rutsche starr (nicht-vibrierend) ausgestaltet sein.

Die Sortieranordnung umfasst, wie erwähnt, die rotierende Trommel 2, in der mehrere Permanentmagnete 1 eingefasst sind, deren Pole (Nord, N und Süd, S) in der Figur gekennzeichnet sind. Die Ausrichtung der Pole alterniert dabei von einem Magneten zum nächsten, so dass z.B. einmal der Nordpol nach au-βen in Richtung des Pulvers zeigt und beim benachbarten Magneten dann der Südpol usw. Die Trennschicht 4 ist durch ein nicht-magnetisches Blech ausgebildet, wobei auch eine andersartige nicht-magnetische Kapselung um die Magnettrommel herum möglich ist.

Die Trommel 2 mitsamt den Magneten rotiert in der eingezeichneten Rotationsrichtung 3. Wenn die miteinander vermischten Pulverpartikel 5, 6 auf der Rutsche in den Einflussbereich der Magneten 1 gelangen, werden die ferromagnetischen Pulverpartikel 5 abgelenkt und zu der Trennschicht 4 gezogen. Eine Ablenkrichtung 9 für die ferromagnetischen Pulverpartikel 5 ist in der Figur eingezeichnet. Die angezogenen ferromagnetischen Pulverpartikel 5 rei-βen dabei einige nicht-ferromagnetische Pulverpartikel 6 mit, die abgeschüttelt werden soll. Durch die anmeldungsgemäße Rotation der Trommel 2 wird dies auf Vorteilhafte Weise ermöglicht: Die Abtransporttrajektorie 10 für die ferromagnetischen Pulverpartikel 5 verläuft oberhalb der Trommel 2, d.h., die ferromagnetischen Pulverpartikel 5 müssen entgegen der Schwerkraft nach oben und über die Trommel hinweg geleitetet werden. Das geschieht, indem während der Manipulation der Sortieranordnung die ferromagnetischen Partikel 5 durch einen ersten Magneten einer bestimmten Polausrichtung an die Trennschicht 4 gezogen werden. Da sich dieser erste Magnet dann in die Rotationsrichtung 3 weiterdreht, gelangen die so angezogenen Pulverpartikel 5 in den Einflussbereich des nachfolgenden zweiten Magneten mit umgekehrter Polung und werden deshalb von der Trennschicht 4 wieder abgestoßen. Noch bevor die derart abgestoßenen ferromagnetischen Pulverpartikel 5 den magnetischen Einflussbereich aber wieder verlassen, wird bereits der nächste, dritte Magnet seinen Einfluss ausüben, der die gleiche Polung aufweist wie der erste Magnet. Der dritte Magnet zieht die ferromagnetischen Pulverpartikel 5 also wieder an. So beginnen die ferromagnetischen Pulverpartikel 5 auf der Oberfläche der Trennschicht 4 zu springen. Es kann auch von einem "tanzen" bzw. "sich überschlagen" oder "umwälzen" gesprochen werden. Insgesamt ergibt sich eine Bewegung der ferromagnetischen Pulverpartikel entlang der eingezeichneten Abtransporttrajektorie 10, also über die erste Trommel hinweg, wobei diese Bewegung von der Sprungbewegung in Bezug auf die Trennschicht 4 überlagert wird. Bei jedem derart ausgeführten Sprung werden zumindest einige der mitgerissenen nicht-ferromagnetische Pulverpartikel 6 abgeschüttelt und fallen zurück auf die Rutsche. Das schwerkraftbedingte Zurückfallen kann zusätzlich bspw. durch einen Luftstrom unterstützt werden.

Es sei nochmals hervorgehoben, dass dementsprechend eine Besonderheit darin liegt, dass die Rotationsrichtung 3 der Magneten 1 gerade entgegen der Abtransportrichtung läuft. Dabei kann anmeldungsgemäß ein Abtransport der ferromagnetischen Partikel 5 gewährleistet werden wenn die Trennschicht stillsteht. Alternativ kann die Trennschicht 4 ebenfalls rotierend ausgebildet sein. Im letzteren Fall ist die Bewegungsrichtung der Trennschicht in Richtung der Abtransporttrajektorie 10, d.h. der Rotationsrichtung der Trommel 2 entgegengesetzt.

Durch das beschriebene Springen wird für die oben an der ersten Trommel ankommenden Pulverpartikel eine gute Pulverreinheit erreicht, die für eine Weiterverwendung der so separierten ferromagnetischen Pulverpartikel 5 in einem additiven Herstellungsverfahren ausreicht. Oben an der Trommel werden die ferromagnetischen Pulverpartikel 5 auf ein Blech 12 geleitet, zur Abführung der ferromagnetischen Pulverpartikel 5 aus dem Magnetfeld hinaus. Optional kann auch noch eine Abstreifvorrichtung zum Abstreifen der eingefangenen ferromagnetischen Pulverpartikel 5 vorgesehen sein, wobei die Abstreifvorrichtung bspw. ein rotierbares Paddel umfassen kann und/oder wobei die Abstreifvorrichtung in Relation zu der Sortieranordnung bewegbar sein kann. Auch das Blech 12 kann abstreifend ausgestaltet sein.

Ein Teil des auf der Rutsche befindlichen Pulvers passiert die erste Trommel, unterhalb. Dabei handelt es sich einerseits um die abgeschüttelten nicht-ferromagnetischen Pulverpartikel 6, die entlang der Fallrichtung 11 abgeschüttelt bzw. freigegeben werden. Andererseits ist es aber auch möglich, dass nicht alle ferromagnetischen Partikel 5 von der ersten Sortieranordnung erfasst wurden.

Daher ist im Maschinenweg nach der ersten Sortieranordnung noch die zweite Sortieranordnung vorgesehen, die dieses unterhalb der Trommel laufende Pulver nochmals nachfiltert.

Auch die zweite Sortieranordnung ist trommelartig ausgebildet und umfasst eine Trommel 2 mit alternierenden Magneten 1, die sich entgegen einer Abtransporttrajektorie 10 in die eingezeichnete Rotationsrichtung 3 dreht. Die umgebende Trennschicht 4 kann wieder starr oder mit umgekehrtem Drehsinn ausgebildet sein.

Die Pulverpartikel, die auf der Rutsche bzw. Transportanordnung 7 verblieben sind, fallen nun von schräg oben auf die zweite Trommel. Dort wiederholt sich im Wesentlichen der für die erste Sortieranordnung beschriebene Prozess. Die ferromagnetischen Partikel 5 werden abgelenkt und springend nach rechts über die Trommel hinweg abtransportiert, und die nicht-ferromagnetischen Partikel 6 fallen nach links herunter. Ein unten an der zweiten Trommel angeordnetes Trennblech 13 sorgt dafür, dass die beiden Partikelarten in ihre separaten Auffangbehälter gelangen.

Bei der Vorrichtung ist eine Steuereinheit vorgesehen, mit der die Manipulation der Sortieranordnungen gesteuert wird. Das heißt, die Rotationsgeschwindigkeit der Trommel 2 und optional der Trennschicht 4, falls diese rotierbar ausgestaltet ist, kann eingestellt werden. Auch kann die Öffnung des Pulverreservoirs 12 sowie der Winkel der Rutsche mit der Steuereinheit eingestellt werden.

Fig. 1b zeigt eine weitere anmeldungsgemäße Vorrichtung zum Separieren von Pulverpartikeln, wobei auch hier die Magnete 1 in einer zylindrischen Trommel 2 angeordnet sind, deren Achse sich horizontal erstreckt. Eine nicht-magnetische Trennschicht 4 umgibt wieder die Trommel 2 mit den Magneten 1 als zylindrische Kapselung und deckt so die Magneten 1 gegenüber den abzutransportierenden ferromagnetischen Pulverpartikeln 5 ab.

Die Transportanordnung 7 ist ein horizontales Förderband 7, mit dem das Pulvergemisch durch das Magnetfeld geführt wird. Zusätzlich kann ein Gasstrom entlang der Transportrichtung 8 der Transportanordnung 7 vorgesehen sein.

Die Magnete 1 können als Permanentmagnete ausgestaltet sein, die entlang der Rotationsrichtung 3 rotieren, oder die Dynamik der Magneten kann dadurch bereitgestellt werden, dass die Magneten als Elektromagneten ausgestaltet sind, die zyklisch umgepolt werden. Das Umpolen kann dabei den gleichen Effekt erzielen wie die Rotation der Trommel, da sich das Umpolen mit einer bestimmten Frequenz genau wie eine diskrete Verschiebung der Magneten auswirkt. Die im Einflussbereich eines Magneten befindlichen Partikel werden dann bei Umpolung davon abgestoßen und vom benachbarten Magneten angezogen, so dass sich auch eine Bewegung entlang der Abtransporttrajektorie 10 ergibt.

Alternativ oder zusätzlich zu der Dynamik der Magneten kann eine Manipulation durch Bewegen der Trennschicht 4 entlang der Richtung der Abtransporttrajektorie 10 vorgesehen sein.

Fig. 2 zeigt eine weitere Ausgestaltung einer Vorrichtung zum Separieren von ferromagnetischen Pulverpartikeln 5 von damit vermischten nicht-ferromagnetischen Pulverpartikeln 6 mit Partikelgrößen von 250 µm oder weniger.

Die Sortieranordnung ist hier bandartig ausgebildet. Sie verläuft oberhalb der als Förderband ausgebildeten Transportanordnung 7 und im gezeigten Abschnitt parallel dazu. Die Sortieranordnung umfasst eine Vielzahl hintereinander angeordneter Magnete 1 mit alternierender Polung, die an einem Band 2* angeordnet sind. Die Trennschicht 4 ist als weiteres Band oder als Platte ausgebildet und deckt die Magneten 1 gegenüber den abzutransportierenden ferromagnetischen Pulverpartikeln 5 unten ab.

Die Transportanordnung bewegt sich entlang der Transportrichtung 8 und fördert so das Pulvergemisch in den Einflussbereich der Magneten. Die Magneten 1 lenken die ferromagnetischen Pulverpartikel 5 entlang der Ablenkrichtung 9 ab und ziehen sie an die Trennschicht 4. Das Band 2* mit den Magneten 1 bewegt sich in die der Transportrichtung 8 entgegengesetzte Richtung, also nach links. Daraus resultiert gemäß den obigen Darlegungen die Abtransporttrajektorie 10* nach rechts, also in die gleiche Richtung wie die Transportrichtung 8. Optional bewegt sich die Trennschicht 4 nach rechts.

Die ferromagnetischen Pulverpartikel 5 springen also an der Trennschicht 4, mit einer resultierenden Bewegung nach rechts, und schütteln dabei gegebenenfalls mit eingefangene nicht-ferromagnetische Pulverpartikel 6 ab, die unter dem Einfluss der Schwerkraft und gegebenenfalls unter dem Einfluss eines möglichen Gasstroms entlang der Fallrichtung 11 zurück auf das Förderband fallen und dann am Trennblech 13 und vor dem Trennblech 13 in ihren vorgesehenen Auffangbehälter geleitet werden.

Die oben an der Trennschicht 4 springenden Partikel vollführen ihre Bewegung nach rechts über das Trennblech 13 hinaus und werden dann an der Abführvorrichtung 12 abgestreift und hinter dem Trennblech 13 in den für sie vorgesehenen Auffangbehälter geleitet.

Die Erfindung ist durch die Ansprüche definiert. Die nachfolgenden Aspekte können für das Verständnis der Erfindung hilfreich sein und bilden Teil der vorliegenden Offenbarung.
1. Vorrichtung zum Separieren von ferromagnetischen Pulverpartikeln (5) von damit vermischten nicht-ferromagnetischen Pulverpartikeln (6), insbesondere mit Partikelgrößen von 250 µm oder weniger, umfassend eine Sortieranordnung, die eingerichtet ist für einen Abtransport der ferromagnetischen Pulverpartikel (6) entlang einer Abtransporttrajektorie (10), wobei die Sortieranordnung umfasst:
   eine Vielzahl entlang der Abtransporttrajektorie (10) angeordneter Magnete (1) mit alternierender Polung,
   eine nicht-magnetische Trennschicht (4), die die Magneten (1) gegenüber den abzutransportierenden ferromagnetischen Pulverpartikeln (5) abdeckt,
   wobei die Sortieranordnung manipulierbar ausgestaltet ist und eingerichtet ist für eine Manipulation durch
      - Bewegen der Magnete (1) entgegen einer Richtung der Abtransporttrajektorie (10)
         und/oder
      - zyklisches Umpolen der Magnete (1)
         und/oder
      - Bewegen der Trennschicht (4) entlang der Richtung der Abtransporttrajektorie (10),
         wobei die Vorrichtung weiterhin eine Transportanordnung (7) umfasst, die dafür eingerichtet ist, die miteinander vermischten Pulverpartikel (5, 6) aufzunehmen und zu der Sortieranordnung zu führen, so dass die Magnete (1) die ferromagnetischen Pulverpartikel (5) ablenken und zu der Trennschicht (4) ziehen, und die angezogenen ferromagnetischen Pulverpartikel (5) während der Manipulation der Sortieranordnung mit einer die Abtransporttrajektorie (10) überlagernden Sprungbewegung in Bezug auf die Trennschicht (4) abtransportiert werden.
2. Vorrichtung nach einem der vorhergehenden Aspekte, wobei die Magnete (1) in oder an einer zylindrischen Trommel (2) angeordnet sind und die Trennschicht (4) als zylindrische Kapselung die Trommel (2) mit den Magneten (1) umgibt
   oder
   wobei die Magnete (1) in oder an einem Band (2*) angeordnet sind und die Trennschicht (4) beispielsweise als weiteres Band ausgebildet ist.
3. Vorrichtung nach Aspekt 2, wobei die Trommel (2) dafür eingerichtet ist, entgegen der Abtransporttrajektorie (10) und/oder der Transportrichtung (8) zu rotieren oder wobei das Band (2*) dafür eingerichtet ist, entgegen der Abtransporttrajektorie (10) und/oder der Transportrichtung (8) zu laufen.
4. Vorrichtung nach einem der vorhergehenden Aspekte, wobei die Trennschicht (4) nicht-beweglich ausgebildet ist.
5. Vorrichtung nach einem der vorhergehenden Aspekte, außerdem eine der Sortieranordnung nachgelagerte weitere Sortieranordnung umfassend.
6. Vorrichtung nach einem der vorhergehenden Aspekte, außerdem eine Abstreifvorrichtung umfassend, wobei die Abstreifvorrichtung ein rotierbares Paddel umfasst und/oder wobei die Abstreifvorrichtung in Relation zu der Sortieranordnung bewegbar ist.
7. Vorrichtung nach einem der vorhergehenden Aspekte, wobei die Transportanordnung (7) eine Rutsche und/oder ein Förderband umfasst.
8. Vorrichtung nach einem der vorhergehenden Aspekte, wobei die Magnete (1) in oder an einer zylindrischen Trommel (2) angeordnet sind und die Trennschicht (4) als zylindrische Kapselung die Trommel (2) mit den Magneten (1) umgibt, wobei eine Achse der Trommel horizontal ausgerichtet ist und die Abtransporttrajektorie (10) an einer Oberseite der Trommel (2) um die Trommel (2) läuft.
9. Vorrichtung nach einem der Aspekte 1 bis 7, wobei die Magnete (1) in oder an einem Band (2*) angeordnet sind und die Trennschicht (4) beispielsweise als weiteres Band ausgebildet ist, wobei das Band (2*) oberhalb der Transportanordnung (7) angeordnet ist.
10. Vorrichtung nach einem der vorhergehenden Aspekte, wobei die Magnete (1) als Permanentmagnete oder als Elektromagnete ausgebildet sind.
11. Vorrichtung nach einem der vorhergehenden Aspekte, weiterhin eine Steuereinheit zum Steuern der Manipulation aufweisend, mit der eine Geschwindigkeit der Bewegung der Magnete (1) und/oder eine Frequenz des zyklischen Umpolens der Magnete (1) und/der eine Geschwindigkeit der Bewegung der Trennschicht (4) einstellbar ist.
12. Verfahren zum Separieren von ferromagnetischen Pulverpartikeln (5) von damit vermischten nicht-ferromagnetischen Pulverpartikeln (6), umfassend:
   Bereitstellen einer Sortieranordnung für einen Abtransport der ferromagnetischen Pulverpartikel (6) entlang einer Abtransporttrajektorie (10), wobei die Sortieranordnung eine Vielzahl entlang der Abtransporttrajektorie (10) angeordneter Magnete (1) mit alternierender Polung und eine nicht-magnetische Trennschicht (4), die die Magneten (1) gegenüber den abzutransportierenden ferromagnetischen Pulverpartikeln (5) abdeckt, umfasst;
   Führen der miteinander vermischten Pulverpartikel (5, 6) zu der Sortieranordnung, so dass die Magnete (1) die ferromagnetischen Pulverpartikel (5) ablenken und zu der Trennschicht (4) ziehen;
   Manipulieren der Sortieranordnung durch
      - Bewegen der Magnete (1) entgegen einer Richtung der Abtransporttrajektorie (10)
         und/oder
      - zyklisches Umpolen der Magnete (1)
         und/oder
      - Bewegen der Trennschicht (4) entlang der Richtung der Abtransporttrajektorie (10),
      so dass die angezogenen ferromagnetischen Pulverpartikel (5) mit einer die Abtransporttrajektorie überlagernden Sprungbewegung in Bezug auf die Trennschicht (4) abtransportiert werden.
13. Verfahren nach Aspekt 12, wobei die miteinander vermischten ferromagnetischen Pulverpartikel (5) und nicht-ferromagnetischen Pulverpartikel (6) Partikel mit Partikelgrößen von höchstens 250 µm umfassen, insbesondere ausschließlich Partikel mit Partikelgrößen von höchstens 250 µm umfassen.

### Bezugszeichenliste

- 1: Magneten
- 2: Trommel
- 2*: Band
- 3, 3*: Bewegungstrajektorie der Magneten
- 4: Trennschicht
- 5: ferromagnetische Pulverpartikel
- 6: nicht-ferromagnetische Pulverpartikel
- 7: Transportanordnung
- 8: Transportrichtung
- 9: Ablenkrichtung der ferromagnetischen Pulverpartikel
- 10, 10*: Abtransportrichtung
- 11: Fallrichtung der nicht-ferromagnetischen Pulverpartikel
- 12: Abführvorrichtung für die ferromagnetischen Pulverpartikel
- 13: Trennblech
- 14: Gehäuse
- 15: Rohr zur Zustellung des Pulvergemisches in die Sortiereinheit
- 16: Pulverreservoir mit Dosiervorrichtung

## Patentansprüche

1. Vorrichtung zum Separieren von ferromagnetischen Pulverpartikeln (5) von damit vermischten nicht-ferromagnetischen Pulverpartikeln (6), insbesondere mit Partikelgrößen von 250 µm oder weniger, umfassend eine Sortieranordnung, die eingerichtet ist für einen Abtransport der ferromagnetischen Pulverpartikel (5) entlang einer Abtransporttrajektorie (10), wobei die Sortieranordnung umfasst:
eine Vielzahl entlang der Abtransporttrajektorie (10) angeordneter Magnete (1) mit alternierender Polung,
eine nicht-magnetische Trennschicht (4), die die Magneten (1) gegenüber den abzutransportierenden ferromagnetischen Pulverpartikeln (5) abdeckt,
wobei die Sortieranordnung manipulierbar ausgestaltet ist und eingerichtet ist für eine Manipulation durch
- Bewegen der Magnete (1) entgegen einer Richtung der Abtransporttrajektorie (10)
und/oder
- zyklisches Umpolen der Magnete (1)
und/oder
- Bewegen der Trennschicht (4) entlang der Richtung der Abtransporttrajektorie (10),
wobei die Vorrichtung weiterhin eine Transportanordnung (7) umfasst, die dafür eingerichtet ist, die miteinander vermischten Pulverpartikel (5, 6) aufzunehmen und zu der Sortieranordnung zu führen, so dass die Magnete (1) die ferromagnetischen Pulverpartikel (5) von der Transportanordnung (7) weg nach oben, entgegen der Schwerkraft, ablenken und zu der Trennschicht (4) ziehen,
und die angezogenen ferromagnetischen Pulverpartikel (5) während der Manipulation der Sortieranordnung mit einer die Abtransporttrajektorie (10) überlagernden Sprungbewegung in Bezug auf die Trennschicht (4) abtransportiert werden und mitgerissene nicht-ferromagnetische Partikel (6) abgeschüttelt werden und zurück auf die Transportanordnung fallen.

2. Vorrichtung nach einem der vorhergehenden Ansprüche, wobei die Magnete (1) in oder an einer zylindrischen Trommel (2) angeordnet sind und die Trennschicht (4) als zylindrische Kapselung die Trommel (2) mit den Magneten (1) umgibt
oder
wobei die Magnete (1) in oder an einem Band (2*) angeordnet sind und die Trennschicht (4) beispielsweise als weiteres Band ausgebildet ist.

3. Vorrichtung nach Anspruch 2, wobei die Trommel (2) dafür eingerichtet ist, entgegen der Abtransporttrajektorie (10) und/oder der Transportrichtung (8) zu rotieren oder wobei das Band (2*) dafür eingerichtet ist, entgegen der Abtransporttrajektorie (10) und/oder der Transportrichtung (8) zu laufen.

4. Vorrichtung nach einem der vorhergehenden Ansprüche, wobei die Trennschicht (4) nicht-beweglich ausgebildet ist.

5. Vorrichtung nach einem der vorhergehenden Ansprüche, außerdem eine der Sortieranordnung nachgelagerte weitere Sortieranordnung umfassend und/oder außerdem eine Abstreifvorrichtung umfassend, wobei die Abstreifvorrichtung ein rotierbares Paddel umfasst und/oder wobei die Abstreifvorrichtung in Relation zu der Sortieranordnung bewegbar ist.

6. Vorrichtung nach einem der vorhergehenden Ansprüche, wobei die Transportanordnung (7) eine Rutsche umfasst, wobei die Rutsche einen Neigungswinkel von mindestens 1°, bevorzugt mindestens 10° und/oder von höchstens 89 °, bevorzugt höchstens 45° aufweist.

7. Vorrichtung nach Anspruch 6, wobei die Rutsche unterhalb der Sortieranordnung vorbeiführt, vorzugsweise in einem Abstand von höchstens 20 cm, besonders bevorzugt in einem Abstand von höchstens 10 cm oder in einem Abstand von höchstens 5 cm.

8. Vorrichtung nach Anspruch 6 oder 7, wobei die Rutsche aus einem nicht-magnetisierbaren oder einem nicht-magnetischen Material gefertigt ist und/oder wobei die Rutsche eine Rauheit von Rₐ = 25 µm oder weniger aufweist.

9. Vorrichtung nach einem der Ansprüche 1-5, wobei die Transportanordnung ein Förderband umfasst.

10. Vorrichtung nach einem der vorhergehenden Ansprüche, wobei die Magnete (1) in oder an einer zylindrischen Trommel (2) angeordnet sind und die Trennschicht (4) als zylindrische Kapselung die Trommel (2) mit den Magneten (1) umgibt, wobei eine Achse der Trommel horizontal ausgerichtet ist und die Abtransporttrajektorie (10) an einer Oberseite der Trommel (2) um die Trommel (2) läuft.

11. Vorrichtung nach einem der Ansprüche 1 bis 9, wobei die Magnete (1) in oder an einem Band (2*) angeordnet sind und die Trennschicht (4) beispielsweise als weiteres Band ausgebildet ist, wobei das Band (2*) oberhalb der Transportanordnung (7) angeordnet ist.

12. Vorrichtung nach einem der vorhergehenden Ansprüche, wobei ein Pulverreservoir (16) und/oder eine damit verbundene Dosiervorrichtung, aus dem oder aus der die miteinander vermischten Pulverpartikel (5, 6) auf die Transportanordnung (7) gegeben werden, mit einer Vibrationsanordnung gekoppelt ist, zum Einleiten von Vibrationen in das Pulverreservoir (16) oder die damit verbundene Dosiervorrichtung, wobei die Transportanordnung (7) vorzugsweise von dem Pulverreservoir (16) und/oder der Dosiervorrichtung vibrationsentkoppelt ist.

13. Vorrichtung nach einem der vorhergehenden Ansprüche, weiterhin eine Steuereinheit zum Steuern der Manipulation aufweisend, mit der eine Geschwindigkeit der Bewegung der Magnete (1) und/oder eine Frequenz des zyklischen Umpolens der Magnete (1) und/der eine Geschwindigkeit der Bewegung der Trennschicht (4) einstellbar ist.

14. Verfahren zum Separieren von ferromagnetischen Pulverpartikeln (5) von damit vermischten nicht-ferromagnetischen Pulverpartikeln (6), umfassend:
Bereitstellen einer Sortieranordnung, insbesondere in Form einer Vorrichtung nach einem der vorhergehenden Ansprüche, für einen Abtransport der ferromagnetischen Pulverpartikel (6) entlang einer Abtransporttrajektorie (10), wobei die Sortieranordnung eine Vielzahl entlang der Abtransporttrajektorie (10) angeordneter Magnete (1) mit alternierender Polung und eine nicht-magnetische Trennschicht (4), die die Magneten (1) gegenüber den abzutransportierenden ferromagnetischen Pulverpartikeln (5) abdeckt, umfasst;
Führen der miteinander vermischten Pulverpartikel (5, 6) zu der Sortieranordnung, so dass die Magnete (1) die ferromagnetischen Pulverpartikel (5) ablenken und zu der Trennschicht (4) ziehen;
Manipulieren der Sortieranordnung durch
- Bewegen der Magnete (1) entgegen einer Richtung der Abtransporttrajektorie (10)
und/oder
- zyklisches Umpolen der Magnete (1)
und/oder
- Bewegen der Trennschicht (4) entlang der Richtung der Abtransporttrajektorie (10),
so dass die angezogenen ferromagnetischen Pulverpartikel (5) mit einer die Abtransporttrajektorie überlagernden Sprungbewegung in Bezug auf die Trennschicht (4) abtransportiert werden.

15. Verfahren nach Anspruch 12, wobei die miteinander vermischten ferromagnetischen Pulverpartikel (5) und nicht-ferromagnetischen Pulverpartikel (6) Partikel mit Partikelgrößen von höchstens 250 µm umfassen, insbesondere ausschließlich Partikel mit Partikelgrößen von höchstens 250 µm umfassen.
